# EUROPEAN PATENT SPECIFICATION

(11) **EP 2 726 754 B1**
(45) Date of publication and mention of the grant of the patent: **29.11.2017**
(21) Application number: 11776859.8
(22) Date of filing: 30.06.2011
(51) Int. Cl.: F16D 65/14, F16D 55/226

(54) **BRAKE CALIPER FOR A FOUNDATION BRAKE OF AN AUTOMOTIVE VEHICLE, BRAKE ACTUATOR AND FOUNDATION BRAKE COMPRISING SUCH A BRAKE CALIPER AND SUCH AN ACTUATOR**
BREMSSATTEL FÜR EINE GRUNDBREMSE EINES KRAFTFAHRZEUGES, BREMSBETÄTIGUNGSVORRICHTUNG UND GRUNDBREMSE MIT EINEM SOLCHEN BREMSSATTEL UND EINEM SOLCHEN AKTUATOR
ÉTRIER DE FREIN POUR UN FREIN DE BASE D'UN VÉHICULE AUTOMOBILE, ACTIONNEUR DE FREIN ET FREIN DE BASE COMPRENANT LEDIT ÉTRIER DE FREIN ET LEDIT ACTIONNEUR

(43) Date of publication of application: 07.05.2014
(73) Proprietor: Volvo Lastvagnar AB, 405 08 Göteborg (SE)
(72) Inventor: FESTOR, Aude, F-69003 Lyon (FR)
(74) Representative: Volvo Technology Corporation
(86) International application number: PCT/IB2011/002236
(87) International publication number: WO 2013/001330

(56) References cited:
- DE-A1- 4 021 572
- DE-A1- 4 221 983
- US-A1- 2002 007 989

## Description

### TECHNICAL FIELD OF THE INVENTION

The invention concerns a brake caliper for a foundation brake of an automotive vehicle. The invention also concerns a brake actuator adapted to be mounted on a brake caliper of a foundation brake of an automotive vehicle. The invention further concerns a foundation brake for an automotive vehicle comprising such a brake caliper and such a brake actuator.

### BACKGROUND OF THE INVENTION

Foundation brakes, mostly disc brakes, which equip automotive vehicles such as trucks, comprise brake pads adapted to be pressed against discs rotating together with the wheels of the vehicle. To exert this pressing effort, a foundation brake is equipped with an actuator which can be a pneumatic cylinder, adapted to deliver a force transmitted to the brake pads by one or two pistons pertaining to a brake calliper so as to perform the brake operation. Said actuator is generally mounted on the caliper of the foundation brake and fastened by studs. A mounting interface is provided in order to position the actuator with respect to the caliper with accuracy and to maximise stability and tightness of the mounting, so as to prevent blocking and damages of the internal brake mechanism.

Foundation brakes are generally equipped with a continuous wear sensor (CWS) adapted to sense the wear of the brake pads and the brake disc by measuring the displacement of the pressing pistons. Foundation brakes also comprise a manual de-adjuster for changing worn out brake pads.

It is known to use an interface known as the "diamond" interface on which the contact surface between the caliper and the actuator has the shape of a rhombus ("diamond") or of a stretched hexagon. On two opposite sides of this hexagon, a mounting stud of the actuator is received in a corresponding hole of a mounting surface of the caliper, while a central pushrod of the actuator is received through a pushrod hole of the mounting surface of the caliper. In some specific rough conditions, this design does not provide enough stability and tightness, against liquids, mud, gravel and other exterior contaminants, to the mounting.

Another interface known as the "rosette" interface uses a mounting surface in a shape of a cross which improves the stability and tightness of the mounting, especially in those specific rough conditions. This interface has a major drawback because it cannot be applied to all types of brakes. In case a single central piston is used to transmit the effort provided by the actuator to the pads, the continuous wear sensor must be installed right next to the piston, either coaxial or parallel with the piston, and therefore the wear sensor should be installed in a central area of the caliper. In this arrangement, the sensor would interfere with one of the branches of the cross of the "rosette" interface.

It is known from DE-A-42 21 983 and EP 0 099 689 to use interfaces on which a brake actuator is mounted on a caliper thanks to three mounting studs arranged in the shape of a triangle, these studs being received in three corresponding holes of the mounting surface of the caliper. These designs do not provide the possibility to mount a continuous wear sensor on a central area of the caliper.

DE 40 21 572 discloses a mounting interface to mount a brake actuator on a caliper with three fixation points arranged in the shape of a triangle.

### SUMMARY OF THE INVENTION

The aim of the invention is to provide a new brake caliper for a foundation brake of an automotive vehicle which improves stability and tightness of the mounting of the actuator on the caliper.

To this end, the invention concerns a brake caliper for a foundation brake of an automotive vehicle such as a truck, adapted to be fixed on a carrier around a rotatable brake disc of a wheel of the vehicle, the brake caliper comprising at least one movable brake pad adapted to be pressed against a friction surface of the disc along an axis perpendicular to the disc by at least one piston, a mounting surface for mounting a brake actuator, said actuator being adapted to move said piston, a hole for passing an actuating member of the actuator, three mounting holes extending perpendicularly to the mounting surface, and adapted to receive each a mounting stud of the actuator, the mounting holes being arranged in the shape of a triangle around the hole for passing the actuating member. This brake caliper is characterized in that the edges of the triangle formed by the mounting holes are tangent to or outside of the contour of a tightness zone extending around the hole for passing the actuating member and defined as a continuous contact area of the mounting surface. Thanks to the invention, stability and tightness of mounting of the actuator on the caliper is insured by a triangular pressing zone surrounding the hole for passing the actuation member. This arrangement guarantees that any gap between the actuator and the caliper, through which exterior liquid or solid contaminants could reach the interior of the caliper, is sealed by a plane contact in all the area surrounding the hole for passing the actuating member.

According to further aspects of the invention which are advantageous but not compulsory, such a brake caliper may incorporate one or several of the following features:
- The contour of the mounting surface in the vicinity of a central area of the brake caliper is concave.
- The mounting surface has concave edges.
- The triangle formed by the mounting holes has an isosceles form, preferably an equilateral form.
- The inner contour of the tightness zone is the edge of the actuating member passing hole.
- The inner contour of the tightness zone is the inner edge of a gasket sealing the contact between the mounting surface and the actuator around the actuating member passing hole.

The invention also concerns a brake actuator adapted to be mounted on a brake caliper of a foundation brake of an automotive vehicle such as a truck, the actuator comprising at least one actuating member adapted to exert an effort transmitted to the caliper to press at least one brake pad of the brake caliper against a rotatable brake disc of a wheel of the vehicle, the actuator comprising three mounting studs extending from an end face of the actuator and adapted to be inserted into corresponding holes of a mounting surface of the brake caliper, the studs being arranged around the actuating member in the shape of a triangle. This brake actuator is characterized in that the edges of the triangle formed by the studs are tangent to or outside of the inner contour of a tightness zone extending around the actuating member and defined as a continuous contact area of the mounting surface. According to further aspects of the invention which are advantageous but not compulsory, such a brake actuator may incorporate one or several of the following features:
- The contour of the mounting surface in the vicinity of at least one of the edges of the triangle formed by the studs is concave.
- The mounting surface of the actuator has concave edges.
- The triangle formed by the studs has an isosceles form.
- The triangle formed by the studs has an equilateral form.
- The contour of the tightness zone is a peripheral surface of the actuating member.
- The contour of the tightness zone is the outer edge of a gasket sealing the contact between the mounting surface of the actuator and the mounting surface of the brake caliper.
- The actuating member comprises a cylindrical pushrod.

The invention also concerns a foundation disc brake for an automotive vehicle, comprising:
- a brake caliper having at least one movable brake pad;
- an actuator comprising at least one actuating member adapted to move said at least one brake pad of the brake caliper;
- a mounting surface on the brake caliper for mounting the brake actuator;
- a mounting surface on the actuator for mounting the brake caliper;
- several fastening means for fastening actuator on caliper, each fastening means exerting a resulting fastening effort along a fastening direction substantially perpendicular to said mounting surfaces;
- one or several tightness zone TZ, TZ' extending around said actuating member and defined as a continuous contact area of one of the mounting surfaces with the other mounting surface or with an intermediate part between the caliper and the actuator.
characterized in that the foundation disc brake comprises three of said fastening means, the fastening means being arranged around the actuating member so that their fastening directions are in the shape of a triangle, wherein the edges of the triangle formed by the fastening directions are tangent to or outside of the inner contour of the tightness zones TZ, TZ' extending around the actuating member and defined as a continuous contact area of the mounting surface. According to further aspects of the invention which are advantageous but not compulsory, such a foundation brake may incorporate one or several of the following features:
- The foundation brake comprises a single piston for pressing the pads against the disc, whereas a continuous wear sensor is mounted in a middle area of the brake caliper.
- The foundation brake comprises two pistons for pressing the pads against the disc, whereas a continuous wear sensor is mounted next to one of the two pistons.

According to the invention, the actuator and the brake caliper are respectively designed so that their interface ensures a perfect sealing allowing no undesired matter to enter the system around the passageway for the actuating member. Indeed, the means for fastening the actuator on the caliper ensure the fastening effort is properly located tangent to or outside of the inner contour of the tightness zone of the caliper/actuator interface.

### BRIEF DESCRIPTION OF THE DRAWINGS

The invention will now be explained in correspondence with the annexed figures and as an illustrative example, without restricting the object of the invention. In the annexed figures:
- figure 1 is a perspective exploded view of a foundation brake according to the invention, comprising a caliper and an actuator according to the invention;
- figure 2 is a front view on a larger scale and along arrow II on figure 1 of a caliper of a first embodiment of the foundation brake according to the invention;
- figure 3 is a view similar to figure 2, for a second embodiment of the foundation brake according to the invention;
- figure 4 is a view at a larger scale of detail IV on figure 2;
- figure 5 is a view similar to figure 4 of a brake actuator according to the invention;
- figure 6 is a schematic view from above of the calliper of figure 1, for a first type of calliper;
- figure 7 is a schematic view similar to figure 6, for a second type of calliper.

### DETAILED DESCRIPTION OF SOME EMBODIMENTS

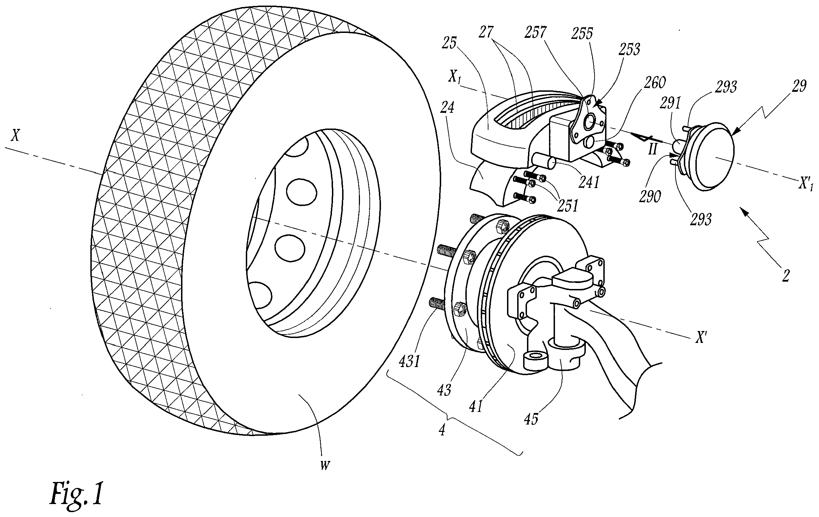

A foundation brake 2 is represented on figure 1. Foundation brake 2 cooperates with a brake disc 41, which is fast in rotation with a mounting flange 43. A wheel W is fixed to mounting flange 43 thanks to bolts 431. Brake disc 41 is rotatable with respect to an axle 45 around a rotation axis X-X' corresponding to the rotation axis of wheel W. Brake disc 41, mounting flange 43 and axle 45 belong to a wheel assembly 4.

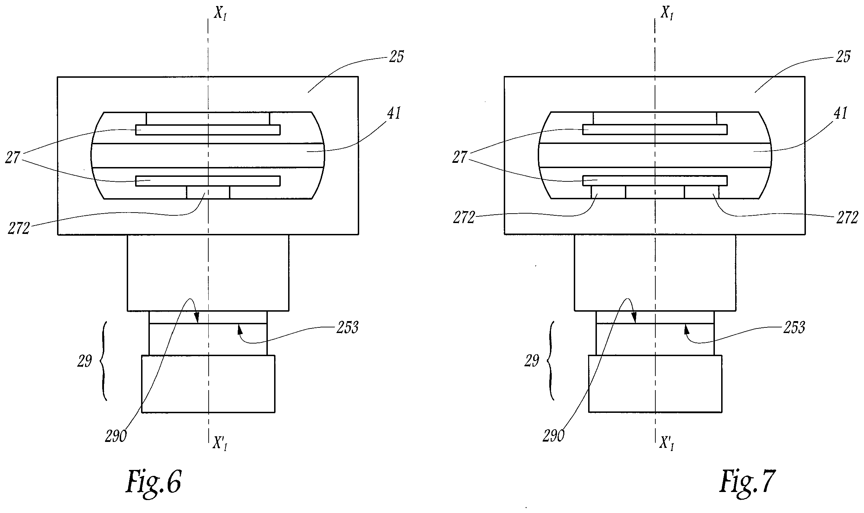

Foundation brake 2 comprises a brake caliper 25 mounted on a carrier 24 which is adapted to be fixed to axle 45 thanks to bolts 251. Brake caliper 25 is mounted by a sliding operation on two parallel yokes 241 extending from carrier 24. Brake disc 41 partially rotates in an internal volume delimited by brake caliper 25. As shown on figure 6, inside the internal volume of brake caliper 25, foundation brake 2 comprises two brake pads 27 facing each other on opposed sides of brake disc 41. Brake pads 27 are parallel to brake disc 41 and at least one is adapted to be pressed against one side of brake disc 41 when a brake operation is required.

Pressing of brake pads 27 against brake disc 41 is realized by at least one piston 272 exerting an effort along an axis X₁-X'₁ which is substantially parallel to axis X-X', and so perpendicularly to the friction surfaces of brake disc 41 and/or of brake pads 27. Piston 272 is indirectly moved or activated by a pushrod 291, or more generally any similar actuating member, of an actuator 29, which is fixed to a mounting surface 253 of brake caliper 25. Actuator 29 is a pneumatic cylinder adapted to deliver an axial effort to be transmitted to brake pads 27 via piston 272. The effort of pushrod 291 is directed parallel to axis X-X' on the figures. On some other types of brakes, pushrod 291 is adapted to exert its effort at an angle with respect to axis X-X'. In such a case, actuator 29 may be mounted on a surface of caliper 25 which is inclined with respect to axis X-X'. The effort of pushrod 291 may also be exerted along a distinct axis parallel to axis X-X'. The effort of pushrod 291 is transmitted to piston 272 by means of non-shown intermediate parts forming a transmission mechanism, for example to amplify the effort exerted by pushrod 291. Brake caliper 25 may include a continuous wear sensor (CWS) which is internal to caliper 25 and represented by its cover 260 in which the electronic components of the CWS are housed. CWS 260 senses the distance along which piston 272 is moved during braking in order to determine the wear on pads 27 and brake disc 41. CWS 260 transmits an electrical signal to a non-shown electronic control unit.

Actuator 29 is mounted and fixed on brake caliper 25 by means of three mounting studs 293, or more generally fastening means of any type, which extend parallel to each other from a mounting surface 290 of actuator 29 facing mounting surface 253. Mounting surface 253 and mounting surface 290 define together the interface between caliper 25 and actuator 29.

Each of mounting studs 293 is adapted to be received in a corresponding hole 255 of caliper 25 extending perpendicularly to mounting surface 253. The studs 293 are arranged around pushrod 291 in the shape of a triangle. In the centre of the triangle formed by holes 255, mounting surface 253 comprises a pushrod hole 257 through which pushrod 291 exerts its effort on a non-shown part belonging to the transmission mechanism between pushrod 291 and piston 272. In the shown embodiment, the pushrod passing hole 257 has a circular edge. In order to prevent foreign matter, such as particulates, water, dirt or mud from reaching the interior of brake caliper 25, a sealing gasket 259 can be mounted in a groove of mounting surface 253 around pushrod hole 257. Alternatively or in addition to the presence of a sealing gasket, this sealing can be achieved by direct contact between the respective mounting surfaces of the actuator and of the caliper.

Lines C1, C2, C3 denote the edges of the triangle formed by the respective centers of holes 255 in a plane perpendicular to the travel direction of piston 472. In order to insure a satisfying tightness or sealing between mounting surface 253 and mounting surface 290, lines C1, C2 and C3 must be tangent to or outside of the inner contour of a tightness zone TZ extending around pushrod hole 257. The term "inner" denotes the fact said contour is the limit of the tightness zone on the side of pushrod hole 257. Tightness zone TZ denotes a continuous area surrounding pushrod 257 and in which a minimal mechanical contact exists between mounting surfaces 253 and 290, so that no gap can allow foreign matter to reach the interior of caliper 25. The tightness zone is of a general ring shape, although its inner or outer contours can be irregular. In some cases, the inner contour of this tightness zone can be delimited at least locally by the edge of pushrod hole 257.

An intermediate part may be provided between the actuator 29 and the caliper 25. This intermediate part can be a mere annular sealing gasket. It can be tubular spacer. It can comprise a tubular spacer and, on each side of the spacer, a gasket for sealing the contact of the spacer with the corresponding surface. In such a case, the tightness zone is composed of two tightness zone, one for each contact area between one end of the intermediate part and the corresponding mounting surface.

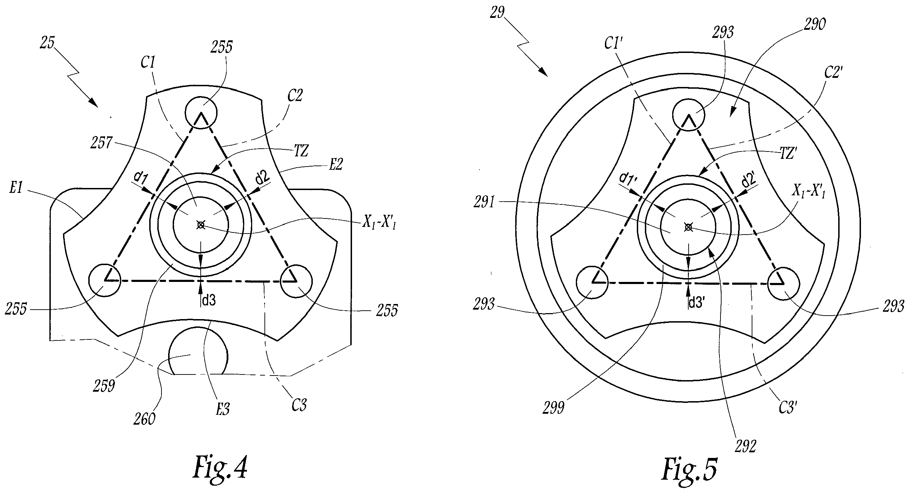

In case of presence of a sealing gasket, the tightness zone can be delimited, at least locally, by the inner edge of sealing gasket 259. In the shown embodiment, tightness zone is defined on figure 4 by sealing gasket 259. Tightness zone TZ can also extend further around sealing gasket 259. Lines C1, C2 and C3 may be tangent to the inner contour of the tightness zone. The respective design of the mounting surfaces of the actuator 29 and of the caliper 25 define the tightness zone where these two surfaces come into contact one with the other, possibly through a sealing gasket or other intermediate part.

The tightness zone also has an outer contour, which in the case of a sealing gasket would correspond to the outer edge of the gasket.

Lines C1, C2 and C3 are at respective distances d1, d2 and d3 from the inner contour of tightness zone TZ. Distances d1, d2 and d3 are measured along radial directions with respect to axis X₁-X'₁. Distances d1, d2 and d3, which can be zero, define the minimal width of a pressing zone which guarantees mechanical contact between mounting surfaces 253 and 290 around tightness zone TZ. This minimal width pressing zone ensures satisfying mechanical stability, to prevent loosening of the tightness of the mounting, for example under action of vibrations or shocks occurring during operations of the vehicle. Distances d1, d2 and d3 can be equal or different from each other. In other words, the lines C1, C2, C3 do not cross the inner contour of the tightness zone and the tightness zone inner contour is a continuous line entirely located inside the triangle formed by lines C1, C2 and C3. On the other hand, the lines C1, C2 and C3, may or may not intersect the outer contour of the tightening zone. In the shown example, the sealing gasket in entirely comprised inside the perimeter delimited by lines C1, C2 and C3, so that they are located outside of the outer contour of the tightness zone.

Practically, actuator 29 is fixed to caliper 25 by non-shown fixation means such as nuts screwed on studs 293 and protruding on the opposite side of caliper 25 with respect to mounting surface 253.

The triangle formed by holes 255 is represented as being equilateral. According to non-shown embodiments of the invention, the triangle formed by holes 255 can have a non equilateral shape. It can for example have an isosceles shape or an irregular shape. In particular, each of edges C1, C2 and C3 can be at a different distance from pushrod hole 257. In the case the triangle formed by holes 255 has an isosceles shape, the hole from which the two equal edges extend is preferably placed in a middle upper area of mounting surface 253 so as to make mounting of actuator on caliper easier.

Mounting surface 253 can have different global shapes, such as a circle or a polygon. Such a polygon may have convex, concave or straight edges. In the present case, mounting surface 253 has a three-branch star shape represented on figures 1 to 4. In the case of a star-shape, the contour of mounting surface 253 comprises edges extending in the vicinity of edges C1, C2 and C3. The edges of mounting surface 253 are referenced as E1, E2 and E3. They are represented as being linked by additional edges in the vicinity of the mounting holes 255, but can also join directly each other. Edges E1, E2 and E3 are concave, in other words curved with their concavity opposite to pushrod hole 257. This feature is optional and permits to reduce the size of mounting surface 253 and to allow mounting of other components, such a CWS 260.

Mounting surface 290 of actuator 29 has substantially the same geometry as mounting surface 253, except for mounting holes 255 replaced by studs 293. It also has a hole for passing pushrod 291. Said hole has an edge 292 which may be circular. The respective centers of studs 293 define a triangle having edges C1', C2' and C3'.

In the same manner as mounting surface 253, mounting surface 290 of actuator 29 may comprise a sealing gasket 299 so as to ensure that the mounting of actuator 29 on brake caliper 25 is fluid and particle tight. Such a sealing element may be installed either on mounting surface 253 of caliper 25, on the mounting surface of actuator 29, or on both brake caliper 25 and actuator 29.

Actuator 29 also has a tightness zone TZ', whose inner contour can be for example delimited at least locally by the edge 292 of the hole for passing the pushrod 291, or by the inner edge of sealing gasket 299. In the embodiment shown on figure 5, tightness zone TZ' is defined by the contact area between the sealing gasket 299 and the actuator mounting surface 290. In such a case, the inner and outer contours of the tightness zone TZ' correspond respectively to the inner and outer edges of the sealing gasket. Respective distances d1', d2' and d3', measured radially to axis X1-X1' between edges C1', C2' and C3' and the inner contour of tightness zone TZ', may have the same values as d1, d2 and d3 for mounting surface 253. The tightness zone TZ' also has an outer contour, which in the case of a sealing gasket would correspond to the outer edge of the gasket.

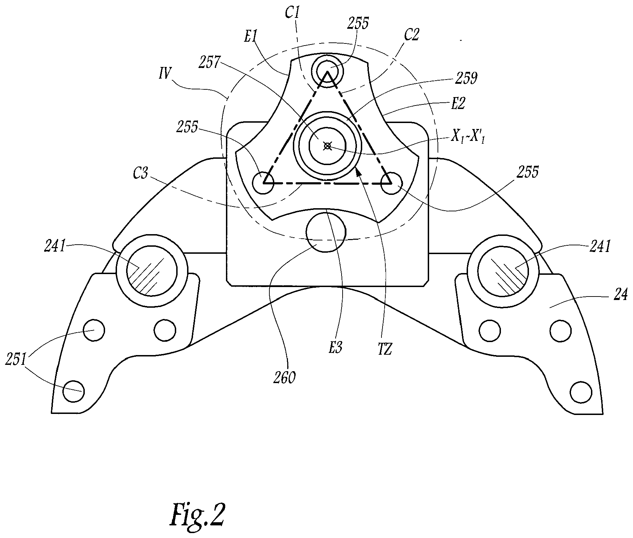

The invention applies to different designs of foundation brake. The invention applies to the single-piston technology, in the case where a single piston 272 presses brake pads 27 on brake disc 41, according to a first embodiment of foundation brake 2 represented on figures 2 and 6. In this case, piston 272 is in a central position with respect to brake caliper 25. Continuous wear sensor 260 must have a sensing direction coaxial with piston 272 and is then placed in a central position in order to detect accurately the displacements of piston 272. In this case, the concave shape can make mounting of continuous wear sensor 260 in a central position easier... A manual de-adjuster, adapted to permit moving piston 272 for changing brake pads 27, can also be installed in this place or next to it.

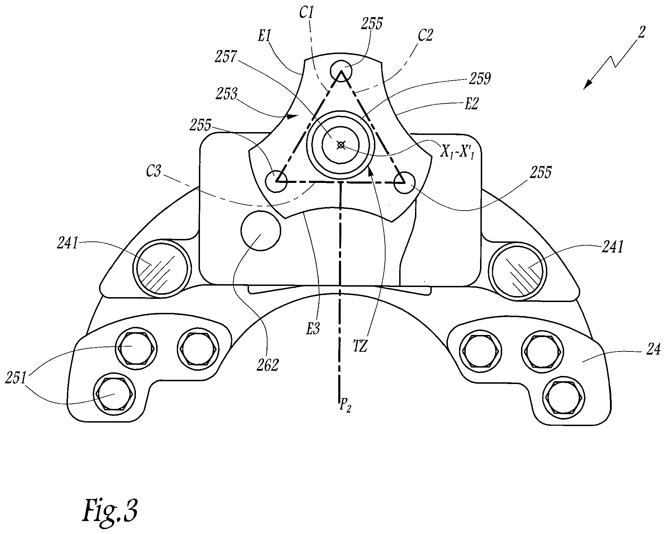

The invention also applies to a design in which two pistons 272 press brake pads 27 against brake disc 41, according to a second embodiment of foundation brake 2 represented on figure 3 and 7.. In this case, a single continuous wear sensor can be used and mounted coaxial or parallel with one of the two pistons. The continuous wear sensor is represented as being mounted on a left piston on figure 5, and is represented by its cover 262.

According to a non-represented embodiment of the invention, the interface between caliper 25 and actuator 29 is concave only in the vicinity of edge E3 of mounting surface 253, allowing the mounting of the continuous wear sensor in a central area of caliper 25 in the case of the use of the single-piston technology. The central area of caliper 25 can be defined as the area located mid-way between the yokes of carrier 24 on which caliper 25 is mounted. This area corresponds to the area in which piston 272 is housed inside brake caliper 25. In this case, the contour of mounting surface 290 of actuator 29 is concave only in the vicinity of any of the edges of the triangle formed by studs 293

According to an alternate embodiment of the invention, actuator 29 is an electrically-powered cylinder.

All in all, the proposed foundation disc brake for an automotive vehicle comprise:
- a brake caliper 25 having at least one movable brake pad 27;
- an actuator 29 comprising at least one actuating member 291 adapted to move said at least one brake pad 27 of the brake caliper 25;
- a mounting surface 253 on the brake caliper 25 for mounting the brake actuator 29;
- a mounting surface 290 on the actuator 29 for mounting the brake caliper 25;
- several fastening means 255, 293 for fastening actuator 29 on caliper 25, each fastening means exerting a resulting fastening effort along a fastening direction substantially perpendicular to said mounting surfaces;
- one or several tightness zone TZ, TZ' extending around said actuating member 291 and defined as a continuous contact area of one of the mounting surfaces with the other mounting surface or with an intermediate part between the caliper and the actuator.

The foundation disc brake comprises three of said fastening means, the fastening means 255, 293 being arranged around the actuating member 291 so that their fastening directions are in the shape of a triangle, wherein the edges of the triangle formed by the fastening directions are tangent to or outside of the inner contour of the tightness zones TZ, TZ' extending around the actuating member 291.

In the embodiment shown on the figures, the fastening means comprise the studs and the holes, but the fastening means could comprise screws, rivets, etc... These studs, screws, etc.. each exert a fastening effort along a fastening direction which corresponds substantially to the axis of the corresponding stud, hole, rivet, screw.... The fastening directions define the vertex of the triangle along which the fastening means are arranged.

The tightness zones to be considered are the continuous contact areas of the concerned mounting surfaces, either of the actuator 29 or of the caliper 25. If the mounting surfaces are directly in contact with each other then the tightness zone is coincident for both the actuator and the caliper. If there is an intermediate part, then the tightness zone is the combination of two tightness zones, one corresponding to the contact between the intermediate part and the actuator mounting surface and the other between the intermediate part and caliper mounting surface. In some cases, like the case of an O-ring type sealing gasket, the tightening zones will be coincident, i.e. having inner and outer contours which are coincident (superposed along the direction of the fastening efforts). If not, the triangle formed by the fastening directions should be tangent to or outside of the inner contour of both tightness zones. In other words, both of the inner contours have to be inside the triangle.

When the actuator comprises a pneumatic cylinder having a certain diameter, the fastening means are preferably arranged so that their fastening effort directions are located along a circle of smaller diameter than the diameter of the pneumatic cylinder, but centered along the axis of the cylinder. In case the fastenings means comprise screws, studs or corresponding holes, as in the shown embodiment, the axis of said screws, studs or holes are therefore preferably located along a circle of smaller diameter than the diameter of the pneumatic cylinder, but centered along the axis of the cylinder.

## Claims

1. A brake caliper (25) for a foundation brake (2) of an automotive vehicle, such as a truck, adapted to be fixed on a carrier (24) around a rotatable brake disc (41) of a wheel (W) of the vehicle, the caliper (25) comprising:
- at least one movable brake pad (27) adapted to be pressed against the disc (41) along an axis (X-X') perpendicular to a friction surface of the disc (41) by at least one piston (272)
- a mounting surface (253) for mounting a brake actuator (29), said actuator being adapted to move said piston (272),
- a hole (257) for passing an actuating member (291) of the actuator (29),
- three mounting holes (255) extending perpendicularly to the mounting surface (253), and adapted to receive each a mounting stud (293) of the actuator (29), the mounting holes (255) being arranged in the shape of a triangle around the hole (257) for passing the actuating member (291),
**characterized in that** the edges (C1, C2, C3) of the triangle formed by the mounting holes (255) are tangent to or outside of the inner contour of a tightness zone (TZ) extending around the hole (257) for passing the actuating member (291) and defined as a continuous contact area of the mounting surface (253).

2. Brake caliper according to claim 1, wherein the contour of the mounting surface (253) in the vicinity of a central area of the brake caliper (25) has a concave edge (E3).

3. Brake caliper according to claim 1 or 2, wherein the mounting surface (253) has concave edges (E1, E2, E3).

4. Brake caliper according to one of the previous claims, wherein the triangle formed by the mounting holes (255) has an isosceles form, preferably an equilateral form.

5. Brake caliper according to one of the previous claims, wherein the contour of the tightness zone (TZ) is the edge of the hole (257) for passing the actuating member (291)

6. Brake caliper according to one of claims 1 to 4, wherein the inner contour of the tightness zone (TZ) corresponds to the inner edge of a gasket (259) sealing the contact between the mounting surface (253) and the actuator (29).

7. Brake caliper according to claim 6, wherein the tightness zone (TZ) corresponds to the contact surface between a gasket (259) and the mounting surface (253).

8. A brake actuator (29) adapted to be mounted on a brake caliper (25) of a foundation brake (2) of an automotive vehicle such as truck, the actuator (29) comprising at least one actuating member (291) adapted to exert an effort transmitted on the caliper (25) to press at least one brake pad (27) of the brake caliper (25) against a rotatable brake disc (41) rotating together with a wheel (W) of the vehicle, the actuator (29) comprising three mounting studs (293) extending from a mounting surface (290) of the actuator (29) and adapted to be inserted into corresponding holes (257) of a mounting surface (253) of the brake caliper (25), the studs (293) being arranged around the actuating member (291) in the shape of a triangle,
**characterized in that** the edges of the triangle formed by the studs (293) are tangent to or outside of the inner contour of a tightness zone (TZ') extending around the actuating member (291) and defined as a continuous contact area of the mounting surface (290).

9. Brake actuator according to claim 8, wherein the contour of the mounting surface (290) of the actuator (29) in the vicinity of at least one of the edges of the triangle formed by the studs (293) is concave.

10. Brake actuator according to claim 8 or 9, wherein the mounting surface (290) of the actuator (29) has concave edges.

11. Brake actuator according to one of claims 8 to 10, wherein the triangle formed by the studs (293) has an isosceles form.

12. Brake actuator according to one of claims 8 to 11, wherein the triangle formed by the studs (293) has an equilateral form.

13. Brake actuator according to one of claims 8 to 12, wherein the inner contour of the tightness zone (TZ') is a peripheral edge of a hole (292) for passing the actuating member (291).

14. Brake actuator according to one of claims 8 to 13, wherein the inner contour of the tightness zone (TZ') corresponds to the inner edge of a gasket (299) sealing the contact between the mounting surface (290) of the actuator (29) and the mounting surface (253) of the brake caliper (25).

15. Brake actuator according to one of claims 8 to 14, wherein the tightness zone (TZ') corresponds to the contact surface between a gasket (259) and the mounting surface (290).

16. Foundation disc brake for an automotive vehicle, comprising:
- a brake caliper (25) having at least one movable brake pad (27);
- an actuator (29) comprising at least one actuating member (291) adapted to move said at least one brake pad (27) of the brake caliper (25);
- a mounting surface (253) on the brake caliper (25) for mounting the brake actuator (29);
- a mounting surface (290) on the actuator (29) for mounting the brake caliper (25);
- several fastening means (255, 293) for fastening the actuator (29) on the caliper (25), each fastening means exerting a resulting fastening effort along a fastening direction substantially perpendicular to said mounting surfaces;
- one or several tightness zone (TZ, TZ') extending around said actuating member (291) and defined as a continuous contact area of one of the mounting surfaces with the other mounting surface or with an intermediate part between the caliper and the actuator;
wherein the foundation disc brake comprises three of said fastening means, the fastening means (255, 293) being arranged around the actuating member (291) so that their fastening directions are in the shape of a triangle ; **characterized in that** the edges of the triangle formed by the fastening directions are tangent to or outside of the inner contour of the tightness zones (TZ, TZ') extending around the actuating member (291) and defined as a continuous contact area of the mounting surface (253).

17. Foundation disc brake according to claim 16, wherein it comprises a single piston (272) for pressing the at least one pad (27) against the disc (41), and wherein a continuous wear sensor (260) is mounted in a middle area of the brake caliper (25).

18. Foundation disc brake according to claim 16, wherein it comprises two pistons (272) for pressing the at least one pad (27) against the disc (41), and wherein a continuous wear sensor (262) is mounted next to one of the two pistons (272).

## Patentansprüche

1. Bremssattel (25) für eine Basisbremse (2) eines Kraftfahrzeugs, wie etwa eines Lastwagens, der daran angepasst ist, auf einem Träger (24) um eine drehbare Bremsscheibe (41) eines Rads (W) des Fahrzeugs fixiert zu sein, wobei der Sattel (25) umfasst:
- wenigstens einen beweglichen Bremsbelag (27), der daran angepasst ist, entlang einer Achse (X-X'), die senkrecht zu einer Reibungsfläche der Scheibe (41) ist, durch wenigstens einen Kolben (272) gegen die Scheibe (41) gepresst zu werden,
- eine Montagefläche (253) zum Montieren eines Bremsaktuators (29), wobei der Aktuator daran angepasst ist, den Kolben (272) zu bewegen,
- ein Loch (257) zum Durchlassen eines Betätigungselements (291) des Aktuators (29),
- drei Montagelöcher (255), die sich senkrecht zu der Montagefläche (253) erstrecken und daran angepasst sind, jeweils einen Montagebolzen (293) des Aktuators (29) aufzunehmen, wobei die Montagelöcher (255) zum Durchlassen des Betätigungselements (291) in Form eines Dreiecks um das Loch (257) herum angeordnet sind,
**dadurch gekennzeichnet, dass** die Kanten (C1, C2, C3) des durch die Montagelöcher (255) gebildeten Dreiecks tangential zu oder außerhalb der Innenkontur einer Dichtigkeitszone (TZ) sind, die sich zum Durchlassen des Betätigungselements (291) um das Loch (257) erstreckt und als kontinuierlicher Kontaktbereich der Montagefläche (253) gebildet ist.

2. Bremssattel nach Anspruch 1, wobei die Kontur der Montagefläche (253) in der Nähe eines zentralen Bereichs des Bremssattels (25) eine konkave Kante (E3) aufweist.

3. Bremssattel nach Anspruch 1 oder 2, wobei die Montagefläche (253) konkave Kanten (E1, E2, E3) aufweist.

4. Bremssattel nach einem der vorhergehenden Ansprüche, wobei das durch die Montagelöcher (255) gebildete Dreieck eine gleichschenklige Form, vorzugweise eine gleichseitige Form aufweist.

5. Bremssattel nach einem der vorhergehenden Ansprüche, wobei die Kontur der Dichtigkeitszone (TZ) die Kante des Lochs (257) zum Durchlassen des Betätigungselements (291) ist.

6. Bremssattel nach einem der Ansprüche 1 bis 4, wobei die Innenkontur der Dichtigkeitszone (TZ) der Innenkante einer Dichtung (259) entspricht, die den Kontakt zwischen der Montagefläche (253) und dem Aktuator (29) abdichtet.

7. Bremssattel nach Anspruch 6, wobei die Dichtigkeitszone (TZ) der Kontaktfläche zwischen einer Dichtung (259) und der Montagefläche (253) entspricht.

8. Bremsaktuator (29), der daran angepasst ist, an einem Bremssattel (25) einer Basisbremse (2) eines Kraftfahrzeugs, wie etwa eines Lastwagens, montiert zu sein, wobei der Aktuator (29) wenigstens ein Betätigungselement (291) umfasst, das daran angepasst ist, eine auf den Sattel (25) übertragene Kraft auszuüben, um wenigstens einen Bremsbelag (27) des Bremssattels (25) gegen eine drehbare Bremsscheibe (41) zu pressen, die sich zusammen mit einem Rad (W) des Fahrzeugs dreht, wobei der Aktuator (29) drei Montagebolzen (293) umfasst, die sich von einer Montagefläche (290) des Aktuators (29) erstrecken und daran angepasst sind, in entsprechende Löcher (257) einer Montagefläche (253) des Bremssattels (25) eingefügt zu werden, wobei die Bolzen (293) um das Betätigungselement (291) herum in Form eines Dreiecks angeordnet sind,
**dadurch gekennzeichnet, dass** die Kanten des durch die Bolzen (293) gebildeten Dreiecks tangential zu oder außerhalb der Innenkontur einer Dichtigkeitszone (TZ') sind, die sich um das Betätigungselement (291) erstreckt und als kontinuierlicher Kontaktbereich der Montagefläche (290) gebildet ist.

9. Bremsaktuator nach Anspruch 8, wobei die Kontur der Montagefläche (290) des Aktuators (29) in der Nähe wenigstens einer der Kanten des durch die Bolzen (293) gebildeten Dreiecks konkav ist.

10. Bremsaktuator nach Anspruch 8 oder 9, wobei die Montagefläche (290) des Aktuators (29) konkave Kanten aufweist.

11. Bremsaktuator nach einem der Ansprüche 8 bis 10, wobei das durch die Bolzen (293) gebildete Dreieck eine gleichschenklige Form aufweist.

12. Bremsaktuator nach einem der Ansprüche 8 bis 11, wobei das durch die Bolzen (293) gebildete Dreieck eine gleichseitige Form aufweist.

13. Bremsaktuator nach einem der Ansprüche 8 bis 12, wobei die Innenkontur der Dichtigkeitszone (TZ') eine Umfangskante eines Lochs (292) zum Durchlassen des Betätigungselements (291) ist.

14. Bremsaktuator nach einem der Ansprüche 8 bis 13, wobei die Innenkontur der Dichtigkeitszone (TZ') der Innenkante einer Dichtung (299) entspricht, die den Kontakt zwischen der Montagefläche (290) des Aktuators (29) und der Montagefläche (253) des Bremssattels (25) abdichtet.

15. Bremsaktuator nach einem der Ansprüche 8 bis 14, wobei die Dichtigkeitszone (TZ') der Kontaktfläche zwischen einer Dichtung (259) und der Montagefläche (290) entspricht.

16. Basisscheibenbremse für ein Kraftfahrzeug, umfassend:
- einen Bremssattel (25), der wenigstens einen beweglichen Bremsbelag (27) aufweist;
- einen Aktuator (29), der wenigstens ein Betätigungselement (291) umfasst, das daran angepasst ist, den wenigstens einen Bremsbelag (27) des Bremssattels (25) zu bewegen;
- eine Montagefläche (253) an dem Bremssattel (25) zum Montieren des Bremsaktuators (29);
- eine Montagefläche (290) an dem Aktuator (29) zum Montieren des Bremssattels (25);
- mehrere Befestigungsmittel (255, 293) zum Befestigen des Aktuators (29) an dem Sattel (25), wobei jedes Befestigungsmittel entlang einer Befestigungsrichtung, die im Wesentlichen senkrecht zu den Montageflächen ist, eine resultierende Befestigungskraft ausübt;
- eine oder mehrere Dichtigkeitszonen (TZ, TZ'), die sich um das Betätigungselement (291) herum erstrecken und als kontinuierlicher Kontaktbereich von einer der Montageflächen mit der anderen Montagefläche oder mit einem Zwischenteil zwischen dem Sattel und dem Aktuator gebildet sind;
wobei die Basisscheibenbremse drei von den Befestigungsmitteln umfasst, wobei die Befestigungsmittel (255, 293) um das Betätigungselement (291) herum so angeordnet sind, dass ihre Befestigungsrichtung die Form eines Dreiecks haben;
**dadurch gekennzeichnet, dass** die Kanten des durch die Befestigungsrichtungen gebildeten Dreiecks tangential zu oder außerhalb der Innenkontur der Dichtigkeitszonen (TZ, TZ') sind, die sich um das Betätigungselement (291) herum erstrecken und als kontinuierlicher Kontaktbereich der Montagefläche (253) gebildet sind.

17. Basisscheibenbremse nach Anspruch 16, wobei sie einen einzelnen Kolben (272) zum Pressen des wenigstens einen Belags (27) gegen die Scheibe (41) umfasst, und wobei ein kontinuierlicher Verschleißsensor (260) in einem mittleren Bereich des Bremssattels (25) montiert ist.

18. Basisscheibenbremse nach Anspruch 16, wobei sie zwei Kolben (272) zum Pressen des wenigstens einen Belags (27) gegen die Scheibe (41) umfasst, und wobei ein kontinuierlicher Verschleißsensor (262) neben einem der zwei Kolben (272) montiert ist.

## Revendications

1. Etrier de frein (25) pour un frein de base (2) d'un véhicule automobile, tel qu'un camion, adapté pour être fixé sur un support (24) autour d'un disque de frein rotatif (41) d'une roue (W) du véhicule, l'étrier (25) comprenant:
- au moins une plaquette de frein mobile (27) adaptée pour être pressée contre le disque (41) le long d'un axe (X-X') perpendiculaire à une surface de frottement du disque (41) par au moins un piston (272),
- une surface de montage (253) pour monter un actionneur de frein (29), ledit actionneur étant adapté pour déplacer ledit piston (272),
- un trou (257) pour faire passer un élément d'actionnement (291) de l'actionneur (29),
- trois trous de montage (255) qui s'étendent perpendiculairement à la surface de montage (253), et adaptés pour recevoir chacun un goujon de montage (293) de l'actionneur (29), les trous de montage (255) étant agencés en formant un triangle autour du trou (257) pour faire passer l'élément d'actionnement (291),
**caractérisé en ce que** les bords (C1, C2, C3) du triangle formé par les trous de montage (255) sont tangents à ou situés à l'extérieur du contour intérieur d'une zone d'étanchéité (TZ) qui s'étend autour du trou (257) pour faire passer l'élément d'actionnement (291) et qui est définie comme une aire de contact continue de la surface de montage (253).

2. Etrier de frein selon la revendication 1, dans lequel le contour de la surface de montage (253) dans le voisinage d'une région centrale de l'étrier de frein (25) présente un bord concave (E3).

3. Etrier de frein selon la revendication 1 ou 2, dans lequel la surface de montage (253) présente des bords concaves (E1, E2, E3).

4. Etrier de frein selon l'une des revendications précédentes, dans lequel le triangle formé par les trous de montage (255) présente une forme isocèle, de préférence une forme équilatérale.

5. Etrier de frein selon l'une des revendications précédentes, dans lequel le contour de la zone d'étanchéité (TZ) est le bord du trou (257) pour faire passer l'élément d'actionnement (291).

6. Etrier de frein selon l'une des revendications 1 à 4, dans lequel le contour intérieur de la zone d'étanchéité (TZ) correspond au bord intérieur d'une garniture (259) qui étanchéifie le contact entre la surface de montage (253) et l'actionneur (29).

7. Etrier de frein selon la revendication 6, dans lequel la zone d'étanchéité (TZ) correspond à la surface de contact entre une garniture (259) et la surface de montage (253).

8. Actionneur de frein (29) adapté pour être monté sur un étrier de frein (25) d'un frein de base (2) d'un véhicule automobile tel qu'un camion, l'actionneur (29) comprenant au moins un élément d'actionnement (291) adapté pour exercer un effort transmis sur l'étrier (25) afin de presser au moins une plaquette de frein (27) de l'étrier de frein (25) contre un disque de frein rotatif (41) qui tourne de concert avec une roue (W) du véhicule, l'actionneur (29) comprenant trois goujons de montage (293) qui s'étendent à partir d'une surface de montage (290) de l'actionneur (29) et qui sont adaptés pour être insérés dans des trous correspondants (257) d'une surface de montage (253) de l'étrier de frein (25), les goujons (293) étant agencés autour de l'élément d'actionnement (291) en formant un triangle,
**caractérisé en ce que** les bords du triangle formé par les goujons (293) sont tangents à ou situés à l'extérieur du contour intérieur d'une zone d'étanchéité (TZ') qui s'étend autour de l'élément d'actionnement (291) et qui est définie comme une aire de contact continue de la surface de montage (290).

9. Actionneur de frein selon la revendication 8, dans lequel le contour de la surface de montage (290) de l'actionneur (29) dans le voisinage d'au moins un des bords du triangle formé par le goujons (293) est concave.

10. Actionneur de frein selon la revendication 8 ou 9, dans lequel la surface de montage (290) de l'actionneur (29) présente des bords concaves.

11. Actionneur de frein selon l'une des revendications 8 à 10, dans lequel le triangle formé par les goujons (293) présente une forme isocèle.

12. Actionneur de frein selon l'une des revendications 8 à 11, dans lequel le triangle formé par les goujons (293) présente une forme équilatérale.

13. Actionneur de frein selon l'une des revendications 8 à 12, dans lequel le contour intérieur de la zone d'étanchéité (TZ') est un bord périphérique d'un trou (292) pour faire passer l'élément d'actionnement (291).

14. Actionneur de frein selon l'une des revendications 8 à 13, dans lequel le contour intérieur de la zone d'étanchéité (TZ') correspond au bord intérieur d'une garniture (299) qui étanchéifie le contact entre la surface de montage (290) de l'actionneur (29) et la surface de montage (253) de l'étrier de frein (25).

15. Actionneur de frein selon l'une des revendications 8 à 14, dans lequel la zone d'étanchéité (TZ') correspond à la surface de contact entre une garniture (259) et la surface de montage (290).

16. Frein à disque de base pour un véhicule automobile, comprenant:
- un étrier de frein (25) comprenant au moins une plaquette de frein mobile (27);
- un actionneur (29) comprenant au moins un élément d'actionnement (291) adapté pour déplacer ladite au moins une plaquette de frein (27) de l'étrier de frein (25);
- une surface de montage (253) sur l'étrier de frein (25) pour monter l'actionneur de frein (29);
- une surface de montage (290) sur l'actionneur (29) pour monter l'étrier de frein (25);
- plusieurs moyens de fixation (255, 293) pour fixer l'actionneur (29) sur l'étrier (25), chaque moyen de fixation exerçant un effort de fixation résultant le long d'une direction de fixation sensiblement perpendiculaire auxdites surfaces de montage;
- une ou plusieurs zone(s) d'étanchéité (TZ, TZ') qui s'étendent autour dudit élément d'actionnement (291) et qui est (sont) définies comme une aire de contact continue de l'une des surfaces de montage avec l'autre surface de montage ou avec une pièce intermédiaire entre l'étrier et l'actionneur;
dans lequel le frein à disque de base comprend trois desdits moyens de fixation, les moyens de fixation (255, 293) étant agencés autour de l'élément d'actionnement (291) de telle sorte que leurs directions de fixation forment un triangle,
**caractérisé en ce que** les bords du triangle formé par les directions de fixation sont tangents à ou situés à l'extérieur du contour intérieur des zones d'étanchéité (TZ, TZ') qui s'étendent autour de l'élément d'actionnement (291) et qui sont définies comme une aire de contact continue de la surface de montage (253).

17. Frein à disque de base selon la revendication 16, dans lequel il comprend un seul piston (272) pour presser ladite au moins une plaquette (27) contre le disque (41), et dans lequel un capteur d'usure continue (260) est monté dans une région intermédiaire de l'étrier de frein (25).

18. Frein à disque de base selon la revendication 16, dans lequel il comprend deux pistons (272) pour presser ladite au moins une plaquette (27) contre le disque (41), et dans lequel un capteur d'usure continue (262) est monté à côté de l'un des deux pistons (272).
